# EUROPEAN PATENT SPECIFICATION

(11) **EP 2 188 162 B1**
(45) Date of publication and mention of the grant of the patent: **21.09.2011**
(21) Application number: 08794258.7
(22) Date of filing: 25.08.2008
(51) Int. Cl.: B60T 17/08

(54) **COMPOSITE ADAPTER PLATE**
VERBUNDADAPTERPLATTE
PLAQUE D'ADAPTATEUR COMPOSITE

(30) Priority: 28.08.2007 TR 200705940
(43) Date of publication of application: 26.05.2010
(73) Proprietor: Arfesan Arkan Fren Elemanlari Sanayi Ve Ticaret A.S., 41480 Kocaeli (TR)
(72) Inventor: AKIN, Ahmet, 41480 Kocaeli (TR); BAYKARA, Mustafa, Evren, 41480 Kocaeli (TR); BATTAL, Yavuz, 41480 Kocaeli (TR); YAMUC, Sinan, 41480 Kocaeli (TR)
(74) Representative: Sonn & Partner Patentanwälte
(86) International application number: PCT/TR2008/000104
(87) International publication number: WO 2009/029060

(56) References cited:
- DE-A1- 3 026 596
- GB-A- 789 871
- GB-A- 789 872
- GB-A- 2 036 198

## Description

This invention is related to a composite adapter plate for a spring brake actuator.

An adapter plate, a component of spring brake actuators, is an auxiliary part that creates the service chamber when integrated with the upper housing part; and the park chamber when integrated with the lower housing part by means of a clamp or any formal connection.

As mentioned above, spring brake actuators used in heavy commercial vehicles (truck, trailer truck, trailer, bus, tow (towing vehicle) truck, etc.) comprise of the service chamber that is operated under normal driving conditions and the park chamber that is activated in case of air leakage or discharge of the air deliberately (pulling the hand brake). If the vehicle is requested to be slowed down or stopped, the service chamber is actuated; and if the vehicle is requested to be fixed, the parking chamber is operated. In other words, the service chamber and the parking chamber function respectively when force is applied on the foot brake and on the hand brake.

Both service chamber and parking chamber in addition to the adapter plate are subject to high pressure values during their lifetime due to the operation principle of the actuator. Adapter plates are expected to withstand such forces without any breakdown during their working lives. Nowadays, all of the adapter plates used are made of metallic materials such as aluminum or steel. Therefore, no problems are encountered with the adapter plates while carrying the loads. However except for these forces, there are also other important factors which affect the lifetime of the adapter plates. These are factors like corrosion and abrasion. Adapter plate or other metallic components may be exposed to corrosion and disable the actuator particularly at sea costs or in humid areas. This invention discloses an adapter plate that is made of glass fiber reinforced plastic material and fulfills all operation conditions of the spring brake actuators. This invention is related to the manufacturing of adapter plates by performing new designs and using glass fiber reinforced plastic material instead of aluminum or steel adapter plates used in conventional systems.

Adapter plates are also a component of brake cylinders as being a component of spring brake actuators.

GB-A-2 036 198 discloses an adapter plate for spring brake actuators with a service break chamber and a brake chamber. DE 30 26 596 A1 discloses a brake actuator made of a glass fiber reinforced plastic material.

Adapter plates in existing systems are manufactured by sheet forming with hydraulic press or aluminum casting (sand mould casting technique, die casting, etc.). The most serious disadvantage of all these methods is that the components require additional operations after casting or press forming like turning, welding or coating which takes time and adds cost. Hence, these components cannot be used in the product without these additional operations. With this invention, adapter plates can be used on the product immediately, without any additional operations.

In addition to those mentioned above, it is of significance that the component does not bear any burr following the additional processes. Any burr which may remain on the component would affect the operation of the product in the long term. Thus, cleaning process is certainly carried out on the adapter plate manufactured with conventional methods.

In aluminum die casting, it is common to have some voids inside the part after casting. These voids cause air leakage and are generally caught in assembly line and are sometimes caught in routine maintenance of the vehicle. In both cases, the adapter plate or complete unit should be renewed and these require additional costs.

An adapter plate works under high pressure conditions due to its working conditions. For this reason it has many sealing surfaces. In order to obtain high quality sealing, the surface treatment must be high quality. In steel and aluminum adapter plates the sealing problem is seen often.

Another important problem of the adapter plate manufactured by the conventional methods is the resistance to corrosion. Since the actuators are not mounted in a protected place on the vehicle, they are subjected to all kinds of air-borne effects. Hence, the adapter plates should be coated to ensure good resistance against corrosion.

The adapter plates made of metallic materials such as steel or aluminum are very heavy when compared to plastic. This causes both an increase in the transportation costs of the components and in the transportation costs of the brake actuators. Besides, on a vehicle its common to use more than two brake actuators and any reduction in weight will increase the load that the vehicle will carry according to law. This advantage in long term makes remarkable profit.

Consequently, all of these processes mentioned above affect the costs of the components significantly and thus cause the adapter plate manufactured according to the conventional methods to be more costly.

The composite adapter plate developed by this invention aims to
- eliminate the additional processes such as turning, welding and cleaning that affect the costs of manufacturing;
- avoid sensitive processes performed for the sealing surfaces (centeral section, muff, side parts) on the component;
- eliminate coating or painting processes realized in conventional manufacturing systems;
- maximize the resistance against corrosion by using plastic material;
- eliminates part renewal because of leakage due to voids compared to aluminium and increases reliability of the product;
- decrease the weight of the spring brake actuators and namely the vehicles; and
- minimize the manufacturing costs of the components.

This object is achieved with a composite adapter plate according to claim 1.

The description of the figures prepared for a better explanation of the composite adapter plate, which has been developed with this invention, are given below.
Figure 1 - Perspective View of a conventional Adapter Plate
Figure 2 - Sectional View of a conventional Adapter Plate
Figure 3 - Perspective View of the Composite Adapter Plate according to the invention
Figure 4 - Sectional View of the Composite Adapter Plate according to the invention

The description of the parts- sections- components which are covered in the figures that are prepared for a better explanation of the composite adapter plate, which has been developed with this invention, are separately numbered and given below.
1- Adapter plate
2- Central section of the adapter plate
3- Feathers
4- Air inlets
5- Service chamber
6- Parking chamber
7- Adapter Plate for which new material is used
8- Large feathers
9- Insert (additional component)

This invention is related to the manufacturing of the adapter plate used in the spring brake actuators and made of metallic materials such as steel or aluminum in the conventional systems by using glass fiber reinforced plastic material through the plastic injection method.

Development of technology and invention of new alternative material increase the design flexibility on the products. Application of the new materials on the products brings about major advantages in terms of costs, quality and technical aspects.

Since plastic material is used in this invention, it eliminates the problem of corrosion in the adapter plate. Therefore, it is not needed to carry out any process such as dying or coating the component.

Glass fiber reinforced plastic material used in the design is notably resistant against abrasion. With the use of the said design on the actuator, it does not necessitate the use of central designs (plastic additional components) mentioned in the US Patent No. 005829339A1.

US Patent No. 2003/0075397 A1 may be indicated as a similar example among the comparable patent works with this invention within the field of brake actuators. In the said patent, a piston component used in the Diaphragm - Piston brake actuators is handled with the revisions of the materials utilized in the conventional methods.

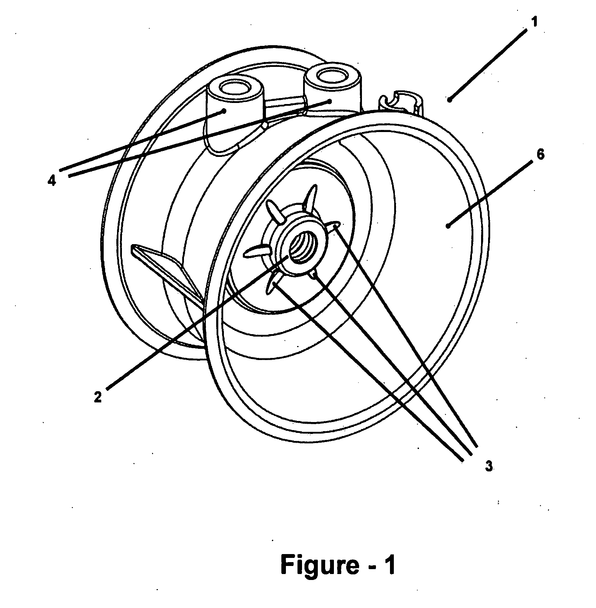

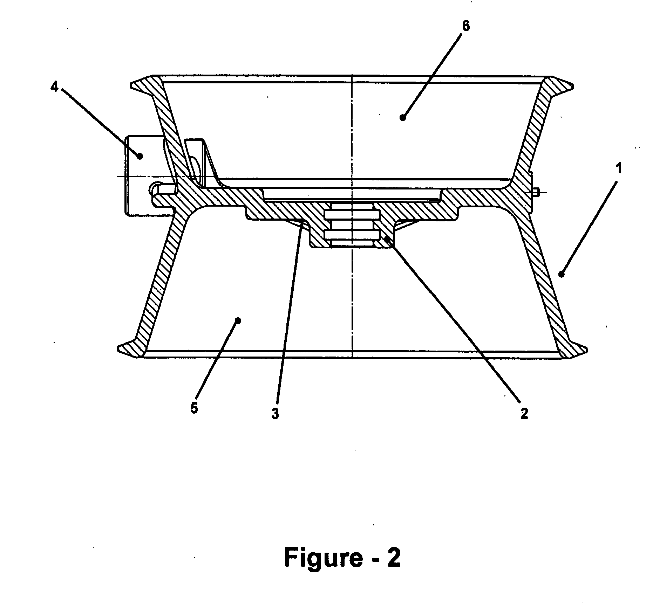

Figure 1 and Figure 2 represent the perspective and sectional views of the conventional adapter plate (1) design. As it can be seen in Figure 1 and Figure 2, feathers (3) are positioned at the periphery of the central section (2) of the conventional adapter plate (1) to increase the strength. These feathers (3) are designed to correspond the high forces created by the transfering of pressurized air to the service chamber (5) and parking chamber (6) through the air inlets (4) on the adapter plate (1).

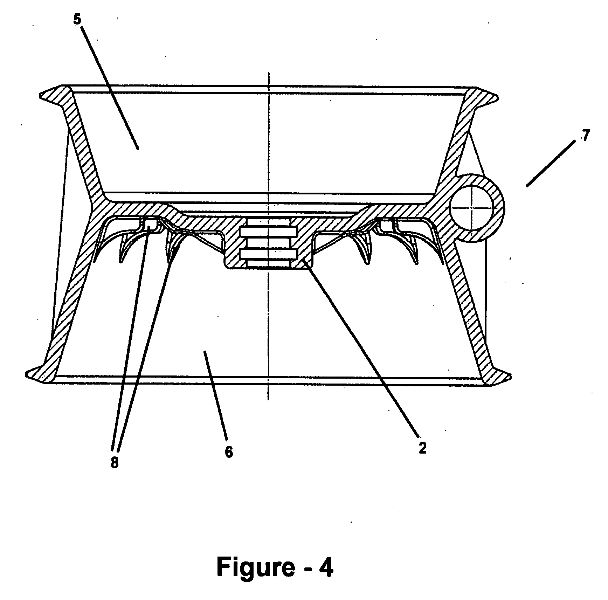

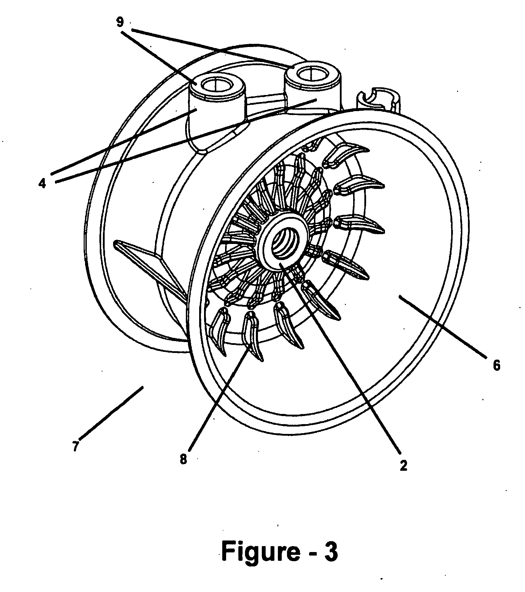

Figure 3 and Figure 4 represent the perspective and sectional views of the adapter plate (7) in the new design manufactured by the use of glass fiber reinforced plastic material. The strength of the material disclosed in the invention (glass fiber reinforced plastic material) is low when compared to the strength of aluminum and steel. Therefore, larger feathers (8) are designed for the parking chamber (6) to correspond the exerted forces in the adapter plates for which the new material is used (7). The said feathers (8) are capable of bearing all forces which the adapter plate (7) is exposed to. Unlike the Figure 3 and Figure 4, the feathers (8) may be thicker and less in number; or thinner and more in number. Besides the feathers (8) may be designed in a different form. Large feathers (8) may have square, rectangular, circular, elliptic, rhomboid, trapezoid or curvilinear shape.

Following the installation of the actuators on the vehicles, fittings are attached to the air inlets (4) of the adapter plates (1, 7) by means of screw threads. These fittings are required to remain attached in all road and air conditions. Thus, the said fittings are attached to the air inlets (4) by compressing with high torque. Conventional adapter plates (1) made of aluminum or steel are able to resist against such high torque values. However, the screw threads in the air inlets (4) of the adapter plates manufactured by the use of the new material, namely glass fiber reinforced plastic material (7) are not capable of resisting these torque values. Thus, the parts which are made of aluminium or similar material and called insert (additional component) (9) are used in the air inlets (4) of the adapter plate (7). This further facilitates the compression of the fittings up to the determined torque values.

One of the parts that is exposed to the most abrasion is the central section (2) of the adapter plate on the actuator. The parking brake force created in the parking chamber (6) of the actuator is transmitted to the service chamber (5) and the shaft by the central section (2). Similarly, sealing between two mentioned chambers (5, 6) is achieved by the said part. Any abrasion which may occur in this part (2) may disable the actuator. Glass fiber reinforced plastic materials are relatively resistant to abrasion. Thus, abrasions are avoided by the use of the adapter plate's (7) own material without further necessity for the use of additional component in the central section (2).

Various plastic materials based on abrasion-resistant special POM (Poly Oxy Methyl / ACETAL) or NYLON (nylon) are used in the central section (2) of the adapter plates (1) made of aluminum, steel or similar materials to overcome the abrasions mentioned above. It is also possible to use such materials in this invention.

## Claims

1. Composite adapter plate (7) for a spring brake actuator, with a service chamber (5) and a parking chamber (6), wherein it is made of glass fiber reinforced plastic material and that it comprises
• feathers (3) at the periphery of its central section (2) for increasing the strength of the composite adapter plate (7), and
• inserts (9) made of aluminum or similar metallic alloys at air inlets (4) for increasing the compression of the fittings up to high torque values.

2. Composite adapter plate (7) made of glass fiber reinforced plastic material according to Claim 1 and **characterized in** having large feathers (8) being thicker and less in number or thinner and more in number to correspond all forces which the adapter plate (7) is exposed to.

3. Composite adapter plate (7) made of glass fiber reinforced plastic material according to any of the preceding claims and **characterized in that** the large feathers (8) are in square, rectangular, circular, elliptic, rhomboid, trapezoid or curvilinear shape.

4. Composite adapter plate (7) made of glass fiber reinforced plastic material according to any of the preceding claims and **characterized in that** having the central section (2) made of special POM (Poly Oxy Methyl / ACETAL) or NYLON (nylon) to increase the abrasion-resistant capabilities of the adapter plate (7).

## Patentansprüche

1. Verbundwerkstoff-Adapterplatte (7) für eine Federspeicherbremse mit einer Betriebsbremskammer (5) und einer Feststellbremskammer (6), wobei die Adapterplatte (7) aus glasfaserverstärktem Kunststoffmaterial gefertigt ist und die Adapterplatte (7) Federn (3) zur Erhöhung der Festigkeit der Verbundwerkstoff-Adapterplatte (7) die am Umfang des zentralen Bereichs (2) der Adapterplatte (7) angeordnet sind, und an Luftanschlüssen (4) vorhandene Einbauteile (9) aus Aluminium oder ähnlichen Metalllegierungen zur Verpressung der Vorrichtung bis zu hohen Drehmomentwerten aufweist.

2. Verbundwerkstoff-Adapterplatte (7) aus glasfaserverstärktem Kunststoffmaterial nach Anspruch 1, **dadurch gekennzeichnet, dass** die Adapterplatte (7) große Federn (8), dicker und in geringerer Anzahl oder dünner in größerer Anzahl, aufweist, um sämtlichen Kräften standzuhalten, denen die Adapterplatte (7) ausgesetzt ist.

3. Verbundwerkstoff-Adapterplatte (7) aus glasfaserverstärktem Kunststoffmaterial nach einem der vorangehenden Ansprüche, **dadurch gekennzeichnet, dass** die großen Federn (8) quadratisch, rechteckig, kreisförmig, elliptisch, rhomboid, trapezförmig oder kurvenförmig sind.

4. Verbundwerkstoff-Adapterplatte (7) aus glasfaserverstärktem Kunststoffmaterial nach einem der vorangehenden Ansprüche, **dadurch gekennzeichnet, dass** der zentrale Bereich (2) der Adapterplatte (7) aus besonderem POM (Polyoximethylen/Acetal) oder Nylon gefertigt ist, um die Widerstandsfähigkeit der Adapterplatte (7) gegen Abrasion zu erhöhen.

## Revendications

1. Plaque composite adaptatrice pour actionner un frein à ressort contenant un compartiment de service (5) et un compartiment de stationnement, composée du matériau plastique renforcé par fibres de verre ; comportant
• Ressorts (3) à travers le périmètre de sa partie centrale (2) pour augmenter la stabilité de ladite plaque composite adaptatrice (7), et,
• Inserts (9) réalisées en aluminium ou alliages métalliques similaires dans les entrées d'air (4) pour augmenter la pression afin d'élever le dispositif aux hautes valeurs de torque

2. Plaque composite adaptatrice (7) réalisée en matériau plastique renforcé par fibres de verre selon la revendication 1, **caractérisée en ce qu'**elle comprend plusieurs ressorts grands (8) plus épais en moindre nombres ou plus fins en plus grand nombre puisqu'elle correspondra à toutes les forces aux quelles est exposée la plaque adaptatrice (7).

3. Plaque composite adaptatrice (7) réalisée en matériau plastique renforcé par fibres de verre selon l'une quelconque des revendications précédentes, **caractérisée en ce que** lesdits ressorts grands (8) sont en forme de carré, rectangle, cercle, elliptiques, rhomboides, trapézoïdal, ou curviligne.

4. Plaque composite adaptatrice (7) réalisée en matériau plastique renforcé par fibres de verre selon l'une quelconque des revendications précédentes, **caractérisée en ce que** ladite partie centrale (2) est réalisée en matériau tel que POM (polyoxyméthylène / acétal) ou nylon pour augmenter les capacités anti-abrasives de la plaque adaptatrice (7).
